Europäisches Patentamt

European Patent Office

Office européen des brevets

(11) Publication number: **0 388 373**
**A1**

# EUROPEAN PATENT APPLICATION

(21) Application number: **90830100.5**

(22) Date of filing: **13.03.90**

(51) Int. Cl.5: **B29C 49/04**

(30) Priority: **15.03.89 IT 338189**

(43) Date of publication of application:
**19.09.90 Bulletin 90/38**

(84) Designated Contracting States:
**AT BE CH DE DK ES FR GB GR LI LU NL SE**

(71) Applicant: **AUTOMA S.p.A.**
**Via Chiesaccia, 38, Calcara - Ponte Samoggia**
**I-40056 Crespellano (Bologna)(IT)**

(72) Inventor: **Bonardelli, Giovanni**
**Via della Marinella**
**I-00061 Anguillara Sabazia (Roma)(IT)**

(74) Representative: **Pederzini, Paolo**
**BUGNION S.p.A. Via Farini n. 37**
**I-40124 Bologna(IT)**

(54) **An extrusion and blow moulding process for plastic objects, utilizing low viscosity materials.**

(57) In a process featuring the discontinuous extrusion of a parison (4) with or without the assistance of an accumulation chamber and accomplished in a time shorter than that required to complete the moulding cycle, valves (6,8) are used to check the flow of molten material and thus generate pressure internally of the extruding head; when the valves (6,8) are opened to release the material for extrusion, the sharp drop in pressure occurring on its emergence from the extruder orifice (9) induces a partial cooling, the effect being to hold the mechanical properties of the parison (4) stable until safely taken up between the halves (5a,5b) of a mould, internally of which it is inflated and invested with the shape of a bottle, container, etc.

FIG 2

## An extrusion and blow moulding process for plastic objects, utilizing low viscosity materials

The present invention concerns a process by which to blow mould objects in plastic, departing from an extruded parison and using low viscosity plastic materials such as PET.

The art field that relates to the manufacture of plastic containers, typically bottles and jerry-can type carriers, etc., embraces a long-established method of moulding which consists in extruding a hollow cylindrical tube, known as a parison, then rendering the parison plastic, enclosing it in a mould bearing the shape of the finished article, and blowing air into the hollow tube such that it expands and is forced to adapt to the shape of the mould, thereafter cooling to a condition in which the plastic acquires a mechanical consistency sufficient to permit of opening up the mould and removing the finished article.

Regarding the production of bottles and containers for food and drink, in particular, manufacturers have been making use for some time now of a polymer known as PET (polyethylene terephthalate); there are essentially two methods of fashioning plastic bottles from this material:
-injection and blow moulding in one stage, whereby a transformation from granules to finished article is brought about in a single machine;
-moulding in two stages, the first an injection stage serving to create initial formers, the second involving transfer of the formers to a blowing machine by which they are heated, and then dilated and/or drawn axially and transversely in a mould of the type mentioned above.

The injection step is required in both instances inasmuch as PET, like other plastic materials used in bottle manufacture, such as polycarbonate and polypropylene, is a low viscosity polymer ($\leqq 1$ dl/g, and typically $0.75\pm0.02$ dl/g), and as a result can not be extruded by conventional methods as found currently in extrusion and blow moulding processes successfully adopted for plastics such as PVC.

These conventional extrusion methods fall into two categories, namely continuous and discontinuous.

In methods of the first such category, for example as described in US patents Re 29 065 and 3 940 225, a continuous parison is extracted from the orifice of an extruding head filled with plastic material, prepared to a paste consistency and forced through the orifice by a screw rotated internally of the head by suitable drive means. Once the extruding parison has emerged to a prescribed length dictated by the dimensions of the finished container, it is encompassed by the two halves of a split mould, and at the same time, separated from the continuously extruding form by cutting means.

The mould is then transferred to a blowing station, and the parison inflated inside the mould to the point of assuming the shape of the finished container; meanwhile, a further parison of the requisite length will have emerged from the extruder orifice.

It will be clear enough that the moulding cycle, i.e. inflation of a parison and subsequent opening of the mould to remove the finished article, must correspond in terms of duration to the extrusion cycle for the relative parison; during this cycle, moreover, the extruding parison must be prevented from sagging and becoming unusable, and indeed from elongating to the point that it separates from the extruder orifice altogether.

Such continuous methods are used successfully in moulding containers of up to 5 or 6 litres capacity and even larger, the walls being blown relatively thin or kept more consistent with equal ease.

In methods of the second type mentioned, use is made of an extruding head that incorporates a chamber preceding the orifice, functioning as an accumulation space, into which the paste plastic material is dispensed in measured quantities.

Material is accumulated in the chamber utilizing a screw drive as described above, the operation of which depends upon the particular design of the equipment, thus:
-using the screw simply to charge the accumulation chamber, whereupon the material is driven through the extruder orifice by separate forcing means;
-using the screw both to charge the accumulation chamber, and thereafter, by investing it with axial movement, to force the accumulated material through the extruder orifice.

With discontinuous extrusion, the extrusion cycle is no longer geared directly to the blow moulding cycle; such methods are thus better suited to the manufacture of large capacity containers, inasmuch as the extrusion cycle can be shortened and there is less risk of the parison sagging and dropping away before the mould has time to close.

Containers in PET, especially if bi-oriented, offer a more efficient barrier than, say, PVC, to the passage of oxygen, water vapour etc., and therefore are particularly suitable for liquids such as fizzy drinks, oil, vinegar, wine and others.

Equipment currently utilized in the manufacture of PET containers is characterized by a high capital outlay, and productivity is conditioned, in the case of the one-stage process, by the time required for the material to stabilize during production, and in the case of the two-stage process, by the fact of having to produce formers and transfer them in orderly fashion to the blow moulding machine.

In an attempt to overcome difficulties encountered in the manufacture of PET containers by one- and two-stage methods utilizing injection as a first stage, and departing from the notion of fashioning containers in PET, bi-oriented or otherwise, using extrusion and blow moulding techniques, a process is disclosed by the applicant whereby PET and other low viscosity plastic materials, e.g. polycarbonate and polyprolylene, can be extruded initially into parisons and then dilated, or drawn axially and transversely, internally of a mould bearing the impression or shape of the finished container.

Departing from the technique of extruding and blow moulding as embraced currently by the art, using discontinuous extrusion, the applicant discerns the possibility of obtaining such optimum pre-extrusion parameters as can ensure subsequently, during the extrusion step, that the emerging parison remains physically and mechanically conditioned to retain a degree of mechanical strength capable of preventing the occurrence of any sag effects for the entire duration of the extrusion cycle.

The process according to the invention consists essentially in extruding and blow moulding parisons discontinuously, using an extruder with or without an accumulation chamber, and conditioning the paste plastic material internally of the extruding head either prior to or during the extrusion cycle by subjecting it to progressively increasing pressure; accordingly, when extrusion is brought about by opening at least one valve located on the extrusion duct, at a moment subsequent to the activation of means by which the material is forced through the extruder orifice and coinciding with the arrival and opening of a mould at the extruding station, the velocity of extrusion and the consequent sharp drop in pressure beyond the extruder orifice will combine to ensure that the outer surface layers of the emerging parison undergo a rapid cooling, the effect of which being to invest the material with a mechanical consistency sufficient to support its own weight until the mould closes immediately on completion of the extrusion cycle.

During work on the process disclosed, it was found, for example, that parisons suitable for moulding containers of between 1 and 1.5 litres capacity could be extruded in approximately 2 minutes, in contrast to the 10 minutes normally required with conventional methods of extrusion. Experiments have shown that to obtain the desired effect during extrusion of a parison for the size of container in question, the optimum pressure internally of the extruder head needs to be between 50 and 100 bar, preferably around 70 bar.

Needless to say, extrusion cycle times and pressure values will vary, perhaps significantly, according to the capacity and shape of the container it is wished to manufacture; the above figures are thus disclosed by way of example and imply no limitation on the invention.

It has also been discovered to advantage that the release of acetaldehyde during transformation of the material in the process disclosed, and more exactly, in the presence of heat, is considerably less pronounced than in conventional PET moulding methods.

As those skilled in the art are aware, acetaldehyde (or ethanal), a volatile colourless liquid having a characteristic fruity odour, occurs in granular PET and is liberated from the polymer on applying heat.

It is therefore necessary to control the formation of acetaldehyde when moulding containers in PET, as this is a substance capable of shedding from the container into its contents and pervading them with the aforementioned odour.

In the case of mineral water bottles, for example, the acetaldehyde content of the PET utilized ought not to exceed 1 or 1.5 ppm.

The formation of acetaldehyde is linked to the fact of the material being worked in a molten state, and can be minimized where moulding conditions are the least punishing possible (an unlikely prospect in the case of conventional PET moulding processes using injection).

In the process disclosed, conditions are rendered the least punishing possible by virtue of the fact that the material is simply extruded, undergoing no thermal stress of a nature attributable to being drawn through injection channels. Moreover, notable reductions are gained in process cycle times, hence in the length of time the PET material is subjected to heat, and by logical extension, in the rate at which acetaldehyde is released.

The invention will now be described in detail, by way of example, with the aid of the accompanying drawings, in which:

-fig 1 shows the extruding head of an extrusion and blow moulding machine provided with at least one valve, located immediately beyond th. screw drive and controlling the duct through which the molten plastic material reaches the orifice;

-fig 2 shows the same extruding head incorporating an accumulation chamber and provided with two valves controlling the flow of material, one of which embodied as in fig 1, the other as a poppet occupying the extruder orifice.

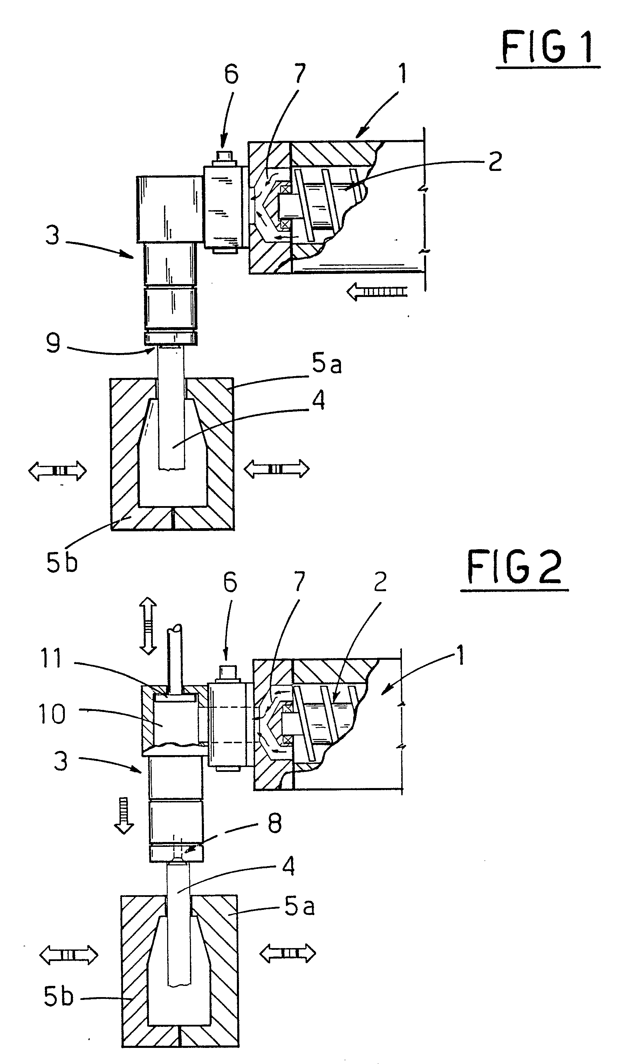

With reference first to fig 1, the extruding head consists essentially in a housing 1 accommodating a screw drive 2, the function of which is to force molten plastic material, drawn from an oven (not illustrated), toward the extruder proper, which is denoted 3. The material emerges from the extruder 3 as a parison 4 destined to be gathered up between the two halves 5a and 5b of a split mould capable of movement between a first work station, at which the parison is collected, and a second work station where the parison is offered to dilating means, typically a blower nozzle, by which it is expanded to the point of matching the contour or shape of the finished article as impressed on the internal surfaces of the two mould halves.

According to the invention, the duct 7 through which molten material reaches the extruder 3 is controlled by a valve 6, located immediately beyond the screw 2 in the driving direction and serving to stop the flow of material to the extruder even with the screw 2 continuing to turn.

Thus it occurs, in operation, that with the screw 2 rotating and the stop valve 6 blocking the duct 7, the molten plastic material will be subjected to a degree of pressure dependent on the thrust of the flow brought gradually to bear by the screw as the material continues to be driven forward.

With an open mould occupying the extruding station, the stop valve 6 is opened to release a rush of the molten material from the orifice, whereupon a swift drop will occur in the pressure formerly created by stopping the flow; as the parison is extruded, its outermost surface layers cool rapidly on contact with the surrounding environment. This cooling has the effect of consolidating the parison to a given degree, investing it with sufficient mechanical strength to bear its own weight until the mould is safely positioned around it.

The extrusion cycle is completed as the valve 6 shuts again; the mould closes, detaching the formed parison from the head and transferring it to the blow moulding station.

Remembering the parison size and container capacity considerations mentioned above, the screw drive 2 might be immobilized for a given duration, in time with the open and shut periods of the valve 6, in order to avoid unwarrantedly high pressure on the plastic material. Moreover, to avoid any leakage of material from the extruding head between cycles, the orifice 9 might also be blocked by means of a poppet valve 8 operating in concert with the stop valve 6.

Still with reference to fig 1, the valves 6 and 8 and the screw 2 can be activated to set the process in motion, departing from the situation in which both the stop valve 6 and the poppet valve 8 are shut, in the following manner:
with the screw 2 turning, the stop valve 6 opens and molten plastic material enters the extruder 3; the poppet 8 remains seated in the orifice 9 for the moment, and accordingly, the material forced into the extruder by the screw 2 becomes subject to pressure; on arrival at a given pressure threshold dependent upon the delay following the opening movement of the stop valve 6, the poppet valve 8 opens and the parison is swiftly extruded.

With extrusion accomplished, the poppet 8 reseats and the screw 2 shuts off. As the stop valve 6 opens to commence a new extrusion cycle, the screw drive 2 restarts, the poppet valve 8 opens, and the procedure is repeated.

A possible variation on the process thus described might be to utilize an extruder provided only with the poppet valve 8, the operation of which being timed with the stop and start of the screw 2.

In this instance, on commencement of the cycle and with the screw 2 turning, the orifice 9 of the extruder 3 will remain blocked by the poppet 8 for a duration sufficient to allow pressure to build inside the head under the continuing accumulation of incoming material. The poppet valve 8 opens to allow extrusion of the material, then reseats, whereupon the screw 2 shuts off.

In certain conditions, the screw drive 2 might also be operated continuously, and particularly in cases where the container to be moulded is of notably small capacity, and the poppet valve 8 therefore will be opening and closing at a brisk rate.

At all events, it is of fundamental importance in any of the foregoing operating situations that the extrusion process remains discontinuous, and that sufficient pressure is generated internally of the extruding head, commensurate with the required size of parison, to produce the rapid cooling effect described above.

In practical application, the extruding head might be embodied in any given design, and incorporate such features as a person skilled in the art may consider opportune.

In the example of fig 2, the extruding head is of the type that incorporates an accumulation chamber, denoted 10. During the part of the operating cycle which immediately precedes extrusion proper, with the duct 7 left open by the relative valve 6 and the orifice 9 blocked by the poppet 8, material is charged by the screw 2 into this chamber. At the moment when extrusion is to occur, the stop valve 6 closes and the poppet valve 8 opens, whereupon forcing means 11 will be operated internally of the chamber 10 to displace the molten material toward the extruder orifice. According to the invention, the force applied through such means 11 is greater than would normally be necessary to extrude the parison 4, and sufficient at all events to generate a degree of pressure internally of the extruder 3 such as will cause a swift passage of the molten material through the orifice and a sudden drop in pressure created internally of the head by the sequence of events thus far described, followed by rapid cooling of the outermost surface layers of the extruding parison on exposure to the external environment. Thus, consolidation of the parison is again achieved as described previously.

To facilitate the creation of the required pressure conditions still further, the extruder orifice 9 might be opened at a given interval following the activation of the forcing means.

With extrusion completed, the poppet valve 8 closes and conditions are restored for further material to begin accumulating in the chamber 10.

## Claims

1) A process for the extrusion and blow moulding of plastic objects, typically containers, comprising the steps of extruding a parison that can be taken up between the two halves of a split mould bearing the impression or shape of the finished article, and inflating the parison with air to expand and adapt it to the shape of the mould, characterized in that extrusion is discontinuous and synchronized with the movements of the mould in such a way as to produce a succession of parisons of the requisite dimensions, each gathered up between the two halves of the mould immediately following extrusion, and occurs ultimately under a predetermined pressure commensurate with the properties of the parison to be extruded, generated internally of the extruder by charging the molten material continuously or discontinuously through an extrusion duct toward the extruder orifice, in such a way as to ensure or contribute to ensuring a swift extrusion of the parison when material is released on opening at least one valve, by which the extrusion duct is blocked when charging and opened when the mould is positioned in readiness at the extruding station.

2) A process as in claim 1, comprising the steps of charging molten plastic material through a duct toward an extruder suitable for the formation of a parison, and of controlling the flow of material by means of at least one valve located between the duct and the extruder orifice, which can be closed to prevent the material from reaching the orifice for a given duration, throughout which material continues to be charged into the duct continuously or discontinuously, and opened to readmit the material when under pressure.

3) A process as in claim 1, comprising the steps of charging molten plastic material through a duct toward an extruder suitable for the formation of a parison, and of controlling the flow of material by means of at least two valves, one of which located between the duct and the extruder and the other capable of blocking the orifice of the extruder, wherein the orifice valve remains closed for a given duration after the valve between the duct and the extruder has been opened, in such a way that the material admitted into the extruder will be under pressure when the orifice valve is opened.

4) A process as in claim 1, wherein material charging continuously through the extruder is made to charge discontinuously by means of a valve that opens and closes the extruder orifice, which is operated to open the orifice when the mould is positioned in readiness at the extruding station.

5) A process for the extrusion and blow moulding of plastic objects, typically containers, comprising the steps of extruding a parison that can be taken up between the two halves of a split mould bearing the impression or shape of the finished article, and inflating the parison with air to expand and adapt it to the shape of the mould, characterized in that extrusion is discontinuous, effected by accumulating molten plastic material internally of a chamber immediately preceding the orifice of the extruder then operating a valve to open the orifice with the mould positioned at the extruding station in readiness to receive the parison, and is brought about ultimately through the agency of means timed to operate in conjunction with the orifice valve, by which the accumulated material is forced from the chamber under a degree of pressure such as causes the extruding parison to cool, partially at least, as a result of the drop in pressure that occurs on its emergence from the orifice.

6) A process as in claim 5, wherein the orifice valve opens simultaneously with activation of the forcing means.

7) A process as in claim 5, wherein the orifice valve opens following activation of the forcing means.

8) A process for the extrusion and blow moulding of plastic objects utilizing low viscosity materials, comprising the step of discontinuously extruding parisons from an extruding head charged with plastic material in the molten state, whereby the material is subjected to an extrusion force such as can generate a degree of pressure that causes the extruding parison to cool at least partially as a result of the drop in pressure which occurs on its emergence from the orifice of the extruding head.

FIG 1

FIG 2

## DOCUMENTS CONSIDERED TO BE RELEVANT

EP 90830100.5

| Category | Citation of document with indication, where appropriate, of relevant passages | Relevant to claim | CLASSIFICATION OF THE APPLICATION (Int Cl⁵) |
|---|---|---|---|
| X | US - A - 3 909 183 (HSU) <br> * Claims 1,3,7; fig. 1 * | 1,4,5 | B 29 C 49/04 |
| Y | | 2,3,6-8 | |
| Y | US - A - 4 028 034 (HAHN) <br> * Column 4, lines 8-13; fig. 2 * | 2,3 | |
| Y | US - A - 2 887 716 (CROSIO) <br> * Column 3, lines 17-42; fig. 1 * | 6-8 | |
| A | US - A - 3 345 690 (HAGEN) <br> * Fig. 2 * | 1,5,8 | |

TECHNICAL FIELDS SEARCHED (Int Cl⁵)

B 29 C

The present search report has been drawn up for all claims

| Place of search | Date of completion of the search | Examiner |
|---|---|---|
| VIENNA | 25-06-1990 | REININGER |